# EUROPÄISCHE PATENTSCHRIFT

(11) **EP 0 666 578 B1**
(45) Veröffentlichungstag und Bekanntmachung des Hinweises auf die Patenterteilung: **23.07.1997**
(21) Anmeldenummer: 94101764.2
(22) Anmeldetag: 05.02.1994
(51) Int. Cl.: H01F 38/30

(54) **Ringkernstromwandler zum Einbau in eine metallgekapselte Hochspannungsschaltanlage**
Current transformer with annular core to be built in a metal cast high-tension switchgear installation
Transformateur de courant à noyau annulaire destiné à être monté dans une installation de commutation à haute tension encapsulée en métal

(43) Veröffentlichungstag der Anmeldung: 09.08.1995
(60) Teilanmeldung: 96120141.5
(73) Patentinhaber: GEC ALSTHOM T&D AG, 5036 Oberentfelden (CH)
(72) Erfinder: Lacher, Walter, CH-5004 Aarau (CH)
(74) Vertreter: Morva, Tibor

(56) Entgegenhaltungen:
- EP-A- 0 063 636
- US-A- 3 701 003
- US-A- 4 104 497

## Beschreibung

Die Erfindung betrifft einen Ringkernstromwandler zum Einbau in eine metallgekapselte Hochspannungsschaltanlage mit mindestens einem mit Sekundärwicklung versehenen innerhalb der aus einer äusseren Kapselung und einer ein inneres Rohr tragenden Kapselung zusammengesetzten Kapselung angeordneten Ringkern und einem in der Oeffnung des Ringkernes verlaufenden Primärleiter, wobei das zwischen dem Ringkern und dem Primärleiter liegende innere Rohr am einen Ende mit der Kapselung elektrisch leitend verbunden und an den übrigen Stellen davon elektrisch isoliert ist.

Aus der EP-B1-0063636 ist ein Ringkernstromwandler der eingangs erwähnten Art bekannt. Durch einen zwischen dem Endbereich des inneren Rohres und dem diesem Endbereich gegenüberliegenden Teil der Kapselung liegenden elektrisch isolierenden Spalt wird verhindert, dass die Kapselung zusammen mit dem inneren Rohr eine die Stromwandlermessung verfälschende Kurzschlusswindung bildet. Bei dieser Anordnung ist ein an der der elektrischen Verbindungsstelle zwischen der Kapselung und dem inneren Rohr abgekehrten Seite des Ringkernes mit der Kapselung elektrisch leitend verbundener und an den übrigen Stellen davon elektrisch isolierter, das innere Rohr teilweise überlappender, elektrisch leitender, zylindrischer Abschirmkörper vorhanden. Der Ueberlappungsteil des Abschirmkörpers einschliesslich der zwischen ihm und dem inneren Rohr liegenden Isolation bildet mit der zwischen diesen Teilen vorhandenen Kapazität einen Kondensator. Dieser Kondensator soll verhindern, dass einerseits eine im Primärleiter geführte steile Wanderwelle in der Sekundärwicklung des Stromwandlers eine hohe Ueberspannung induziert und dass anderseits das Potential der Sekundärwicklung durch kapazitive Koppelung mit der Kapselung erhöht wird. Je nach Laufrichtung der Wanderwelle würde ausserdem am freien Ende des inneren Rohres ohne Abschirmkörper eine Reflexion entstehen, weil die Länge dieses inneren Rohres meistens in der Grössenordnung der Frontlänge der Wanderwelle liegt. Diese reflektierte Welle wäre mit der Stromwandlerwicklung kapazitiv gekoppelt und würde ohne den hier vorgesehenen Kondensator auch zur Potentialerhöhung der Sekundärwicklung beitragen. Ein den Kondensator überbrückender ohm'scher Widerstand ist hier nicht vorgesehen. Die vorerwähnten steilen Wanderwellen können in einer metallgekapselten Hochspannungsschaltanlage auftreten, wenn ein eine kleine Kapazität darstellender Anlagenteil zugeschaltet wird, oder wenn sich beim Ausschalten eines kleinen kapazitiven Stromes Rück- oder Wiederzündungen ergeben. Die steile Wanderwelle breitet sich vom Entstehungsort des Schaltlichtbogens beidseitig mit Frontzeiten zwischen 2 und 300 ns aus. Bei dieser bekannten Anordnung hat man aber festgestellt, dass die Kapazität des die Trennstelle der Kapselung unter dem Ringkern überbrückenden Kondensators mit der Induktivität des den Ringkern umgebenden Teiles des Gehäuses ein schwingfähiges Gebilde mit einer schwachen Dämpfung bildet. Diese resonanzfähige Anordnung kann bei durch steile Wanderwellen angeregten Resonanzschwingungen zu verhältnismässig hohen Ueberspannungen führen.

Aus der US-A-3701003 ist ein weiterer Ringkernstromwandler bekannt. Bei diesem Ringkernstromwandler ist der mit einer Sekundärwicklung bewickelter Ringkern mit einer Metallkapselung umgeben. Um zu verhindern, dass die Metallkapselung eine Kurzschlusswindung bildet, ist die Metallkapselung mit einem elektrisch isolierten Spalt versehen. Zur Dämpfung hochfrequenter, durch steile Wanderwellen eingeleiteter Schwingungen ist der Spalt mit mehreren ohm'schen Widerständen in induktivitätsarmer Anordnung überbrückt. Die Widerstände müssen einzeln in die Anordnung eingebracht und elektrisch leitend angeschlossen werden. Diese konstruktive Lösung ist kompliziert und daher mit wirtschaftlichen Nachteilen verbunden.

Die Aufgabe der vorliegenden Erfindung ist es, einen Ringkernstromwandler der eingangs erwähnten Art zu entwickeln, bei welchem die Sekundärwicklung des Stromwandlers gegen durch steile Wanderwellen verursachte Ueberspannungen mit einfachen Mitteln durch eine einfache konstruktive Lösung geschützt ist.

Die gestellte Aufgabe ist dadurch gelöst, dass der elektrisch isolierende Spalt zwischen dem der elektrischen Verbindungsstelle zwischen der das innere Rohr tragenden Kapselung und dem inneren Rohr abgekehrten Endbereich des inneren Rohres und dem von diesem Endbereich getrennten Teil der äusseren Kapselung durch aus Metallschichtwiderständen bestehende ohm'sche Widerstände überbrückt ist, - wobei die Widerstände auf einer beidseitig mit einer elektrisch leitenden Schicht versehenen ringförmigen Isolierplatte am Umfang gleichmässig verteilt befestigt und mit ihren Anschlüssen an diesen elektrisch leitenden Schichten angeschlossen sind, wobei die eine elektrisch leitende Schicht mit der den Spalt begrenzenden Teil der äusseren Kapselung und die andere elektrisch leitende Schicht mit dem spaltseitigen Endbereich des inneren Rohres elektrisch leitend verbunden sind. Diese einfache konstruktive Lösung enthält eine einfache, aus mehreren ohm'schen Metallschichtwiderständen und aus einer ringförmigen, beidseitig elektrisch leitend beschichteten Isolierplatte gebildete Anordnung. Die Ueberbrückung des Spaltes durch geeignete ohm'sche Widerstände bewirkt nicht nur die starke Herabsetzung der durch die steilen Wanderwellen in der Sekundärwicklung induzierten Ueberspannungen, sondern auch dass eine übermässige, durch die kapazitive Koppelung zwischen der Kapselung und der Sekundärwicklung bewirkte Potentialerhöhung der Sekundärwicklung in tragbaren Grenzen gehalten wird. Die Reflexion der steilen Wanderwellen am freien Ende des inneren Rohres hält sich bei dieser Lösung auch im Rahmen. Um den Durchgang steiler Wanderwellen durch den ohm'schen Widerstand zu begünstigen, ist es wesentlich, dass der ohm'sche Widerstand induktivitätsarm ist, was durch die gleichmässige Verteilung der Teilwiderstände am Umfang des Spaltes erreicht ist.

Im folgenden werden anhand der beiliegenden Zeichnungen Ausführungsbeispiele der Erfindung näher beschrieben. Es zeigen:
- Fig.1: einen in einer Kapselung untergebrachten Ringkernstromwandler im Schnitt,
- Fig.2: ein Viertel einer ringförmigen Isolierplatte aus Fig.1 mit mehreren daran befestigten Metallschichtwiderständen und
- Fig.3: einen Querschnitt der Anordnung eines Metallschichtwiderstandes auf der Isolierplatte.

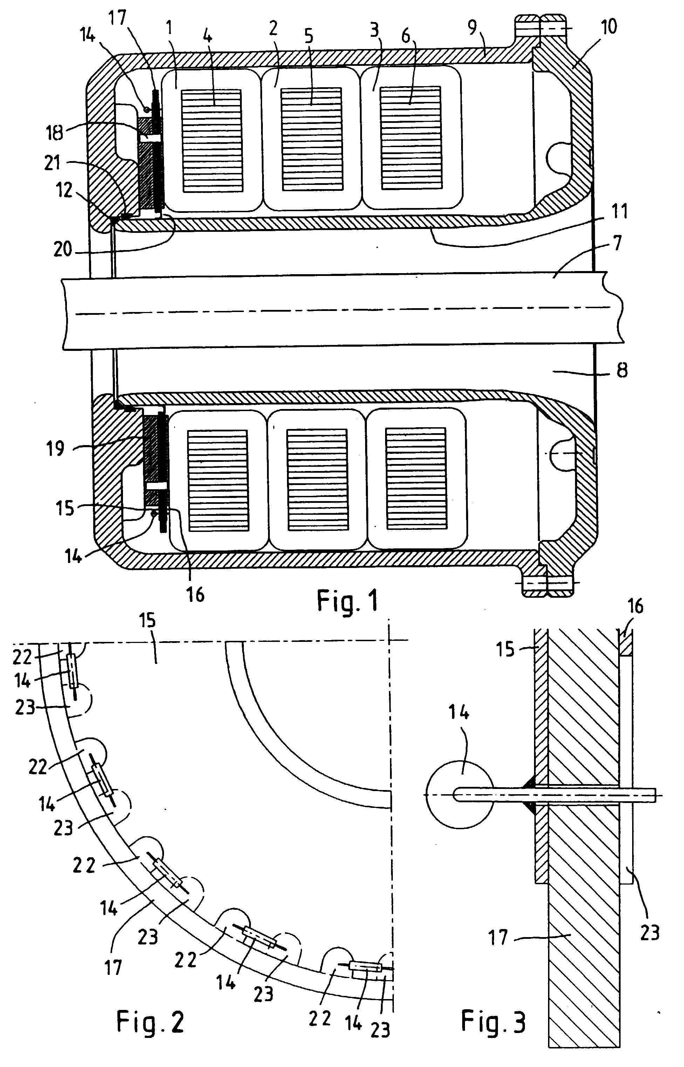

In Fig.1 ist ein Ringkernstromwandler mit drei mit Sekundärwicklungen 1, 2, 3 versehenen Ringkernen 4, 5, 6 im Schnitt dargestellt. In der Oeffnung der Ringkerne 4, 5, 6 verläuft ein für die Führung des Betriebsstromes bestimmter Primärleiter 7. Der Ringkernstromwandler ist zum Einbau in eine metallgekapselte Hochspannungsschaltanlage vorgesehen. Der Primärleiter 7 ist in einem mit einem Isoliergas, z.B. SF₆ gefüllten, dicht abgeschlossenen Druckgasraum 8 geführt. Die Ringkerne 4, 5, 6 sind in einem mit der übrigen, nicht dargestellten Metallkapselung der Hochspannungsschaltanlage elektrisch leitend verbundenen äusseren Kapselung 9 aus Metall untergebracht. Diese äussere Kapselung 9 ist an einer ebenfalls mit der Metallkapselung der Hochspannungsschaltanlage elektrisch leitend verbundenen Kapselung 10 angeschlossen. Die Kapselung 10 trägt innen ein mit ihr elektrisch leitend verbundenes in die Oeffnung der Ringkerne 4, 5, 6 hineinragendes inneres Rohr 11. Das innere Rohr 11 ist nur an seinem einen Ende mit der Kapselung 10 elektrisch leitend verbunden, an den übrigen Stellen ist es davon und von den übrigen Kapselungsteilen elektrisch isoliert. Mit seinem der elektrischen Verbindungsstelle zwischen dem inneren Rohr 11 und der Kapselung 10 abgekehrten Ende liegt das innere Rohr 11 an einem in der äusseren Kapselung 9 eingelegten Dichtungsring 12 gasdicht an. Der die Ringkerne 4, 5, 6 aufnehmende Innenraum der äusseren Kapselung 9 ist mit Luft gefüllt.

Der zwischen dem der elektrischen Verbindungsstelle zwischen der Kapselung 10 und dem inneren Rohr 11 abgekehrten Endbereich des inneren Rohres 11 und der äusseren Kapselung 9 vorhandene elektrisch isolierende Spalt verhindert, dass die äussere Kapselung 9 zusammen mit der daran anschliessenden Kapselung 10 und dem inneren Rohr 11 eine die Stromwandlermessung verfälschende Kurzschlusswindung entsteht. Dieser Spalt ist durch mehrere ohm'sche Widerstände überbrückt. Die ohm'schen Widerstände sind aus mehreren am Umfang gleichmässig verteilten, untereinander gleich ausgebildeten, Teilwiderständen zusammengesetzt. Auf dieser Weise ist der ohm'sche Widerstand induktivitätsarm.

Die den in der Oeffnung der Ringkerne 4, 5, 6 liegenden Spalt überbrückende ohm'schen Widerstände bedeuteten bei betriebsfrequenten Strömen eine verhältnismässig kleine Belastung des Stromwandlers. Die Summe der Windungsspannungen der drei Ringkerne 4, 5, 6 treibt einen kleinen, bei der Bestimmung der Messgenauigkeit des Stromwandlers zu berücksichtigenden Strom durch die den Spalt überbrückenden ohm'schen Widerstände. Sollte eine steile Wanderwelle die Stromwandleranordnung durchqueren, so wird die Impedanz für diese steile Wanderwelle über die den Spalt überbrückenden ohm'schen Widerstände kleiner als über die mit einer Induktivität behaftete äussere Kapselung 9. Somit wird eine steile Wanderwelle bei dieser Anordnung praktisch vollständig in der Oeffnung der Ringkerne 4, 5, 6 hin- und zurückgeführt, so dass in der Sekundärwicklungen 1, 2, 3 praktisch keine Ueberspannungen induziert werden. Eine Potentialerhöhung der Sekundärwicklungen 1, 2, 3 über die kapazitive Koppelung mit der äusseren Kapselung bleibt bei dieser Anordnung auch in tragbaren Rahmen. Dadurch, dass die den Spalt überbrückenden ohm'schen Widerstände eine Reflexion der in Richtung des freien Endes des inneren Rohres 11 laufenden steilen Wanderwellen am freien Ende des inneren Rohres 11 unterbindet, fällt eine durch Reflexion bedingte Potentialerhöhung der mit dem inneren Rohr 11 kapazitiv gekoppelten Sekundärwicklungen 1, 2, 3 auch in einen vernachlässigbaren Bereich.

Beim Ringkernstromwandler nach Fig.1 sind zur Ueberbrückung des zwischen dem der elektrischen Verbindungsstelle zwischen der Kapselung 10 und dem inneren Rohr 11 abgekehrten Endbereich des inneren Rohres 11 und der äusseren Kapselung 9 liegenden Spaltes mehrere am Umfang gleichmässig verteilte Metallschichtwiderstände 14 vorgesehen. Diese Metallschichtwiderstände 14 sind auf einer beidseitig mit einer elektrisch leitenden Schicht 15, 16 versehenen, ringförmigen Isolierplatte 17 befestigt. Die Isolierplatte 17 liegt zwischen dem radial verlaufenden Teil des äusseren Gehäuses 9 und den Ringkernen 4, 5, 6. Sie ist mit Stiften 18 an einem Metallring 19 befestigt, der seinerseits mit der äusseren Kapselung 9 in elektrischer Verbindung steht. Die eine elektrisch leitende Schicht 15 der Isolierplatte 17 steht mit dem Metallring 19 und so auch mit der äusseren Kapselung 9 in elektrisch leitender Verbindung. Die andere elektrisch leitende Schicht 16 ist innen mit mehreren nach innen ragenden Kontaktfedern 20 ausgerüstet, die am freien Endbereich des inneren Rohres 11 anstehen und eine elektrisch leitende Verbindung damit herstellen. Das freie Ende des inneren Rohres 11 ist in der äusseren Kapselung 9 durch einen elektrisch isolierenden Zentrierring 21 geführt. Fig.2 zeigt in der Draufsicht vergrössert ein Viertel der Isolierplatte 17 mit der einen elektrisch leitenden Schicht 15 und mit den Metallschichtwiderständen 14. Die elektrisch leitenden Schichten 15, 16 sind an ihren Umfängen mit U-förmigen Ausschnitten 22, 23 versehen. Die U-förmigen Ausschnitte 23 in der elektrisch leitenden Schicht 16 sind in Fig.2 mit gestrichelter Linie auch eingezeichnet. Aus dieser Fig.2 ist erkennbar, dass die Ausschnitte 22 und 23 um die Distanz der Anschlüsse der Metallschichtwiderstände 14 versetzt sind. Fig.3 zeigt vergrössert einen Querschnitt über eine Befestigungsstelle eines Metallschichtwiderstandes 14 auf der Isolierplatte 17. Die einen Anschlüsse der Metallschichtwiderstände 14 sind an der einen elektrisch leitenden Schicht 15 angelötet, wobei hinter dieser Lötstelle ein Ausschnitt 23 der anderen elektrisch leitenden Schicht 16 liegt. Die anderen, in Fig.3 nicht sichtbaren Anschlüsse der Metallschichtwiderstände 14 sind an der anderen elektrisch leitenden Schicht 16 hinter den Ausschnitten 22 angelötet. Der zwischen den elektrisch leitenden Schichten 15, 16 messbare ohm'sche Widerstand ist induktivitätsarm.

## Patentansprüche

1. Ringkernstromwandler zum Einbau in eine metallgekapselte Hochspannungsschaltanlage mit mindestens einem mit Sekundärwicklung (1, 2, 3) versehenen innerhalb der aus einer äusseren Kapselung (9) und einer ein inneres Rohr (11) tragenden Kapselung (10) zusammengesetzten Kapselung (9, 10) angeordneten Ringkern (4, 5, 6) und einem in der Oeffnung des Ringkernes (4, 5, 6) verlaufenden Primärleiter (7), wobei das zwischen dem Ringkern (4, 5, 6) und dem Primärleiter (7) liegende innere Rohr (11) am einen Ende mit der Kapselung (10) elektrisch leitend verbunden und an den übrigen Stellen davon elektrisch isoliert ist, **dadurch gekennzeichnet, dass** der elektrisch isolierende Spalt zwischen dem der elektrischen Verbindungsstelle zwischen der Kapselung (10) und dem inneren Rohr (11) abgekehrten Endbereich des inneren Rohres (11) und dem von diesem Endbereich getrennten Teil der äusseren Kapselung (9) durch aus Metallschichtwiderständen (14) bestehende ohm'sche Widerstände überbrückt ist, wobei die Widerstände (14) auf einer beidseitig mit einer elektrisch leitenden Schicht (15, 16) versehenen ringförmigen Isolierplatte (17) am Umfang gleichmässig verteilt befestigt und mit ihren Anschlüssen an diesen elektrisch leitenden Schichten (15, 16) angeschlossen sind, wobei die eine elektrisch leitende Schicht (15) mit der den Spalt begrenzenden Teil der äusseren Kapselung (9) und die andere elektrisch leitende Schicht (16) mit dem spaltseitigen Endbereich des inneren Rohres (11) elektrisch leitend verbunden sind.

## Claims

1. Toroidal-core transformer for incorporation into a metal-encapsulated high-voltage switching station, with at least one toroidal core (4, 5, 6) fitted with a secondary winding (1, 2, 3) and positioned within the compound encapsulation (9, 10) consisting of an outer encapsulation (9) and an encapsulation (10) that carries an inner tube (11), and with a primary conductor (7) running in the opening of the toroidal core (4, 5, 6), so that the inner tube (11) lying between the toroidal core (4, 5, 6) and the primary conductor (7) is electrically conductively connected at one end to the encapsulation (10) and at the other points is insulated from it, characterized in that the electrically insulating gap between that end area of the inner tube (11) facing away from the electrical junction point between the encapsulation (10) and the inner tube (11) and the part of the outer encapsulation (9) that is separated from this end area is bridged by ohmic resistors formed by metal film resistors (14), so that the resistors (14) are uniformly distributed around and fastened to the perimeter of a toroidal insulating plate (17) that is provided on each side with an electrically conductive layer (15, 16), and are connected at their terminations to these electrically conductive layers (15, 16), so that one electrically conductive layer (15) is electrically conductively connected to that part of the outer encapsulation (9) bordering the gap and the other electrically conductive layer (16) is electrically conductively connected to the gap-side end-area of the inner tube (11).

## Revendications

1. Transformateur d'intensité à noyau annulaire pour montage dans une installation de commutation à haute tension à enceinte métallique, comportant au moins un noyau annulaire (4, 5, 6) muni d'un bobinage secondaire (1, 2, 3) et disposé à l'intérieur de l'enceinte (9, 10) composée d'une enceinte extérieure (9) et d'une enceinte (10) portant un tube intérieur (11), ainsi qu'un conducteur primaire (7) passant dans l'ouverture du noyau annulaire (4, 5, 6), dans le cas duquel le tube intérieur (11), situé entre le noyau annulaire (4, 5, 6) et le conducteur primaire (7), est, à une extrémité, relié, avec conduction électrique, à l'enceinte (10) et en est électriquement isolé aux autres endroits, caractérisé par le fait que le jeu, électriquement isolant, existant entre, d'une part, la zone d'extrémité du tube intérieur (11) éloignée de l'endroit de la liaison électrique entre l'enceinte (10) et le tube intérieur (11) et, d'autre part, la portion de l'enceinte extérieure (9) séparée de cette zone d'extrémité est ponté par des résistances ohmiques constituées de résistances à couche métallique (14), étant précisé que les résistances (14) sont fixées, régulièrement réparties à la périphérie, sur une plaque isolante annulaire (17) munie des deux côtés d'une couche électriquement conductrice (15, 16) et sont reliées par leurs bornes à ces couches électriquement conductrices (15, 16), étant précisé que l'une (15) des couches électriquement conductrices est reliée à la portion de l'enceinte extérieure (9) qui limite le jeu et que l'autre couche électriquement conductrice (16) est reliée, avec conduction électrique, à la zone d'extrémité du tube intérieur (11) située du côté du jeu.
